# EUROPEAN PATENT APPLICATION

(11) **EP 3 521 896 A1**
(43) Date of publication of application: **07.08.2019**
(21) Application number: 19153988.1
(22) Date of filing: 28.01.2019
(51) Int. Cl.: G02B 27/00, G02B 27/01

(54) **VEHICLE DISPATCH SERVICE COORDINATED SEARCH ASSISTANCE SYSTEM**

(30) Priority: 01.02.2018 JP 2018016537
(71) Applicant: TOYOTA JIDOSHA KABUSHIKI KAISHA, Toyota-shi, Aichi-ken, 471-8571 (JP)
(72) Inventor: AMANO, Mikihiro, Aichi-ken, 471-8571 (JP); TAKEUCHI, Yusuke, Aichi-ken, 471-8571 (JP); SHIN, Akinori, Aichi-ken, 471-8571 (JP); OGAWA, Tomomi, Aichi-ken, 471-8571 (JP); ONAGI, Tsutomu, Aichi-ken, 471-8571 (JP)
(74) Representative: J A Kemp

(57) **Abstract**

A vehicle dispatch service coordinated search assistance system, includes a glasses-type wearable terminal; a terminal orientation information acquisition section; a gaze information acquisition section; a vehicle dispatch responder-side position information acquisition section; a vehicle dispatch requester-side position information acquisition section; and a control unit that, in coordination with a vehicle dispatch service system that matches the vehicle dispatch requester with the dispatch response vehicle, displays position information relating to the vehicle dispatch requester on a lens section of the wearable terminal based on the orientation information relating to the wearable terminal, the gaze information relating to the vehicle dispatch responder, the position information relating to the vehicle dispatch responder and to the dispatch response vehicle, and the position information relating to the vehicle dispatch requester, such that the display is overlaid on an actual scene viewed by the vehicle dispatch responder through the lens section of the wearable terminal.

## Description

### BACKGROUND

### Technical Field

The present invention relates to a vehicle dispatch service coordinated search assistance system.

### Related Art

Japanese Patent Application Laid-Open (JP-A) No. H10-105889 discloses technology to improve the convenience of a vehicle dispatch service by receiving position information and information relating to characteristics, numbers and the like of users wishing to board a vehicle of the vehicle dispatch service, and displaying this information on a display section.

However, in the method disclosed in JP-ANo. H10-105889, in cases in which many people are present around a person who is a search target, it is difficult to identify the person who is the search target, and, for example, it is not possible to ascertain the search target intuitively.

### SUMMARY

In consideration of the above circumstances, an object of the present invention is to obtain a vehicle dispatch service coordinated search assistance system that enables a desired search target to be found intuitively.

A vehicle dispatch service coordinated search assistance system of a first aspect of the present invention includes: a glasses-type wearable terminal that is worn by a vehicle dispatch responder; a terminal orientation information acquisition section that acquires orientation information relating to the wearable terminal; a gaze information acquisition section that acquires gaze information relating to the vehicle dispatch responder; a vehicle dispatch responder-side position information acquisition section that acquires position information relating to the vehicle dispatch responder and to a dispatch response vehicle carrying the vehicle dispatch responder; a vehicle dispatch requester-side position information acquisition section that acquires position information relating to a vehicle dispatch requester; and a processor that, in coordination with a vehicle dispatch service system that matches the vehicle dispatch requester with the dispatch response vehicle, displays position information relating to the vehicle dispatch requester on a lens section of the wearable terminal based on the orientation information relating to the wearable terminal, the gaze information relating to the vehicle dispatch responder, the position information relating to the vehicle dispatch responder and to the dispatch response vehicle, and the position information relating to the vehicle dispatch requester, such that the display is overlaid on an actual scene viewed by the vehicle dispatch responder through the lens section of the wearable terminal.

In the vehicle dispatch service coordinated search assistance system of the first aspect of the present invention, the position information relating to the vehicle dispatch requester matched by the vehicle dispatch service system is displayed overlaid on the actual scene viewed by the vehicle dispatch responder through the lens section (display section) of the glasses-type wearable terminal worn by the vehicle dispatch responder. This enables the vehicle dispatch responder to intuitively acquire the position information relating to the vehicle dispatch requester without viewing a separately provided search monitor or the like.

Note that the "actual scene" refers to a scene viewed through the lenses of the glasses-type wearable terminal by the wearer, excluding information displayed on the display section of the wearable terminal itself (or a scene that is visible when the wearable terminal has been removed).

A vehicle dispatch service coordinated search assistance system of a second aspect of the present invention is the vehicle dispatch service coordinated search assistance system of the first aspect, wherein the processor displays position information relating to the vehicle dispatch requester on the lens section of the wearable terminal in cases in which the vehicle dispatch requester is positioned within visible range of the vehicle dispatch responder.

In the vehicle dispatch service coordinated search assistance system of the second aspect of the present invention, the position information relating to the vehicle dispatch requester is displayed on the display section of the wearable terminal worn by the vehicle dispatch responder in cases in which the vehicle dispatch requester is positioned within visible range of the vehicle dispatch responder. Thus, the position information is not displayed on the display section of the wearable terminal in cases in which there is still some distance between the vehicle dispatch requester and the dispatch response vehicle and there is no need for the vehicle dispatch responder to search for the vehicle dispatch requester by eye. This thereby enables the view of the vehicle dispatch responder driving the dispatch response vehicle to be unobstructed by the display of position information when the vehicle dispatch responder is heading from a distant location toward the location of the vehicle dispatch requester.

A vehicle dispatch service coordinated search assistance system of a third aspect of the present invention includes: a glasses-type wearable terminal that is worn by a vehicle dispatch requester; a terminal orientation information acquisition section that acquires orientation information relating to the wearable terminal; a gaze information acquisition section that acquires gaze information relating to the vehicle dispatch requester; a vehicle dispatch requester-side position information acquisition section that acquires position information relating to the vehicle dispatch requester; a dispatch response vehicle-side position information acquisition section that acquires position information relating to a dispatch response vehicle; and a processor that, in coordination with a vehicle dispatch service system that matches the vehicle dispatch requester with the dispatch response vehicle, displays position information relating to the dispatch response vehicle on a lens section of the wearable terminal based on the orientation information relating to the wearable terminal, the gaze information relating to the vehicle dispatch requester, the position information relating to the vehicle dispatch requester, and the position information relating to the dispatch response vehicle, such that the display is overlaid on an actual scene viewed by the vehicle dispatch requester through the lens section of the wearable terminal.

In the vehicle dispatch service coordinated search assistance system of the third aspect of the present invention, the position information relating to the dispatch response vehicle matched by the vehicle dispatch service system is displayed on the lens section so as to be overlaid on the actual scene viewed by the vehicle dispatch requester through the lens section (display section) of the glasses-type wearable terminal worn by the vehicle dispatch requester. This enables the vehicle dispatch requester to intuitively acquire the position information relating to the dispatch response vehicle while viewing the actual scene.

A vehicle dispatch service coordinated search assistance system of a fourth aspect of the present invention is the vehicle dispatch service coordinated search assistance system of the third aspect, wherein the processor displays position information relating to the dispatch response vehicle on the lens section of the wearable terminal in cases in which the dispatch response vehicle is positioned within visible range of the vehicle dispatch requester.

In the vehicle dispatch service coordinated search assistance system of the fourth aspect of the present invention, the position information relating to the dispatch response vehicle is displayed on the lens section in cases in which the dispatch response vehicle is positioned within visible range of the vehicle dispatch requester on the display section of the wearable terminal worn by the vehicle dispatch requester. Thus, the position information is not displayed on the display section of the wearable terminal in cases in which there is still some distance between the dispatch response vehicle and the vehicle dispatch requester and there is no need for the vehicle dispatch requester to search for the dispatch response vehicle by eye. This enables good visibility to be secured for the vehicle dispatch requester when awaiting the arrival of a dispatch response vehicle positioned in a distant location.

As described above, the vehicle dispatch service coordinated search assistance system of the first aspect of the present invention has an excellent advantageous effect of enabling the vehicle dispatch responder to intuitively acquire position information relating to the vehicle dispatch requester.

The vehicle dispatch service coordinated search assistance system of the second aspect of the present invention has an excellent advantageous effect of enabling the vehicle dispatch responder to intuitively acquire position information relating to the vehicle dispatch requester in situations in which the position needs to be searched for by eye.

The vehicle dispatch service coordinated search assistance system of the third aspect of the present invention has an excellent advantageous effect of enabling the vehicle dispatch requester to intuitively acquire position information relating to the dispatch response vehicle.

The vehicle dispatch service coordinated search assistance system of the fourth aspect of the present invention has an excellent advantageous effect of enabling the vehicle dispatch requester to intuitively acquire position information relating to the dispatch response vehicle in situations in which the position needs to be searched for by eye.

### BRIEF DESCRIPTION OF THE DRAWINGS

Exemplary embodiments of the present invention will be described in detail based on the following figures, wherein:
Fig. 1 is a schematic diagram illustrating a configuration of a dispatch response vehicle in a vehicle dispatch service coordinated search assistance system according to a first exemplary embodiment;
Fig. 2 is a schematic diagram illustrating a wearable terminal in a vehicle dispatch service coordinated search assistance system according to the first exemplary embodiment;
Fig. 3 is a schematic diagram illustrating coordination between a vehicle dispatch service and the vehicle dispatch service coordinated search assistance system according to the first exemplary embodiment;
Fig. 4 is a schematic diagram illustrating communication between configuration elements configuring the vehicle dispatch service coordinated search assistance system according to the first exemplary embodiment;
Fig. 5 is a flowchart illustrating operation of the vehicle dispatch service coordinated search assistance system according to the first exemplary embodiment;
Fig. 6A is a schematic diagram illustrating a scene when searching for a position using the vehicle dispatch service coordinated search assistance system according to the first exemplary embodiment;
Fig. 6B is a schematic diagram illustrating a scene when searching for a position using a related method;
Fig. 7 is a schematic diagram illustrating communication between configuration elements configuring a vehicle dispatch service coordinated search assistance system according to a second exemplary embodiment;
Fig. 8A is a comparative schematic diagram illustrating searching for a position using the vehicle dispatch service coordinated search assistance system according to the second exemplary embodiment; and
Fig. 8B is a comparative schematic diagram illustrating searching for a position using a related method.

### DETAILED DESCRIPTION

Explanation follows regarding exemplary embodiments of a vehicle dispatch service coordinated search assistance system according to the present invention, with reference to the drawings. In the drawings, the arrow FR indicates a vehicle front direction, the arrow UP indicates a vehicle upward direction, and the arrow RH indicates the right side with respect to a travel direction of a vehicle, as appropriate. Unless specifically stated otherwise, in the following explanation, front, rear, up, down, left, and right directions are used to refer to the front and rear in a vehicle front-rear direction, up and down in a vehicle vertical direction, and left and right when facing the direction of travel.

### First Exemplary Embodiment

### System Configuration

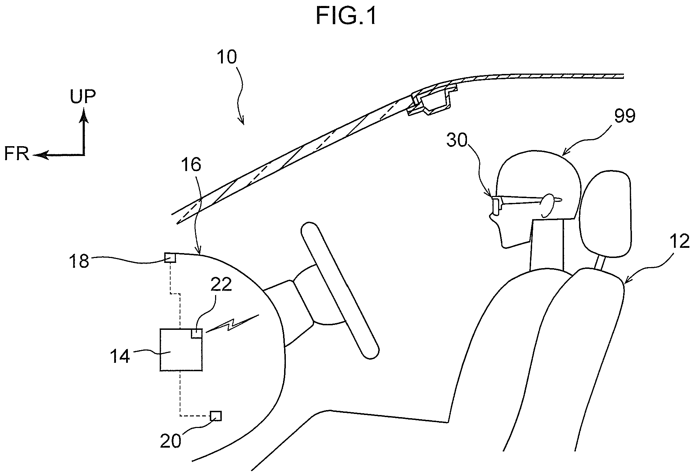

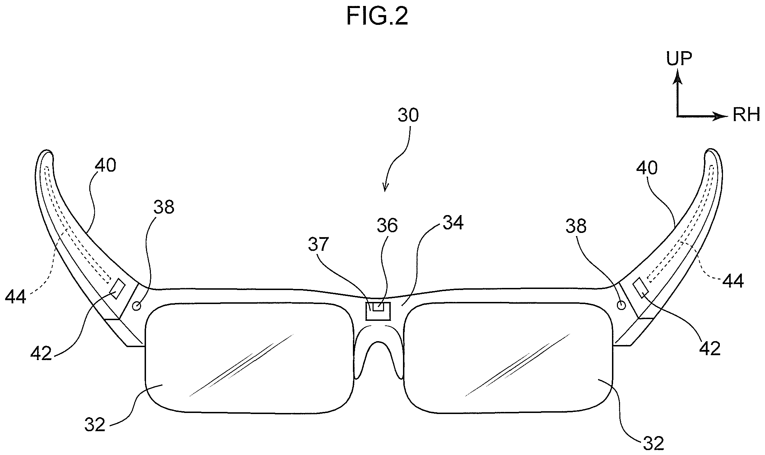

First, explanation follows outlining configuration elements of a vehicle dispatch service coordinated search assistance system according to a first exemplary embodiment, with reference to Fig. 1 and Fig. 2.

Fig. 1 is a schematic diagram illustrating a partial configuration of the vehicle dispatch service coordinated search assistance system according to the first exemplary embodiment. As illustrated in Fig. 1, a wearable terminal 30 is worn by a user 99, serving as a vehicle dispatch responder, in a state in which the user 99 is seated on a seat 12, this being the driving seat of a vehicle 10 configuring a dispatch target vehicle (also referred to as the "dispatch response vehicle 10" for convenience).

The glasses-type wearable terminal 30 (referred to hereafter as the "wearable terminal 30" for convenience) is worn on the head of the user 99. A data processing unit 14 configuring a control unit is installed in an ECU console box (not illustrated in the drawings) provided in an instrument panel 16 of the vehicle 10. A vehicle position information acquisition section 18, serving as a vehicle position acquisition section provided on the instrument panel 16 of the vehicle 10, is electrically connected to the data processing unit 14. Note that the data processing unit 14 is configured including a vehicle-side communication section 22 that is capable of exchanging data with the wearable terminal 30 and the like via wireless communication.

Fig. 2 is a schematic diagram illustrating the wearable terminal 30 of the vehicle dispatch service coordinated search assistance system according to the first exemplary embodiment. The glasses-type wearable terminal 30 illustrated in Fig. 2 is enlarged in order to illustrate in detail the wearable terminal 30 worn by the user 99 illustrated in Fig. 1. Note that in Fig. 2, the wearable terminal 30 is schematically illustrated as viewed from the perspective of the user 99 wearing the wearable terminal 30.

Lens sections 32 (also referred to hereafter as a "display section 32" as appropriate) of the wearable terminal 30 configure a display section for displaying various information. A bridge 34 positioned centrally between the two lens sections 32 on the left and right is provided with a terminal-side data processing unit (processor) 37 configured including a terminal-side communication section 36 that is capable of exchanging data. Cameras 38, serving as a gaze information acquisition section that acquires gaze information regarding the user 99, are provided at outer sides of the two lens sections 32 on the left and right. Gyro sensors 42, serving as a terminal orientation information acquisition section of the wearable terminal 30, are provided in the vicinity of bases of the left and right temples 40 at positions on either side of the left and right lens sections 32. Moreover, a terminal position information acquisition section 44, serving as a terminal position information acquisition section, is provided running along the length direction of the left and right temples 40 from the vicinity of the base of each temple 40 toward the leading end side. The terminal position information acquisition section (terminal position information acquisition section 44) and the vehicle position acquisition section (vehicle position information acquisition section 18) configure a vehicle dispatch responder-side position information acquisition section.

### Coordination with Vehicle Dispatch Service

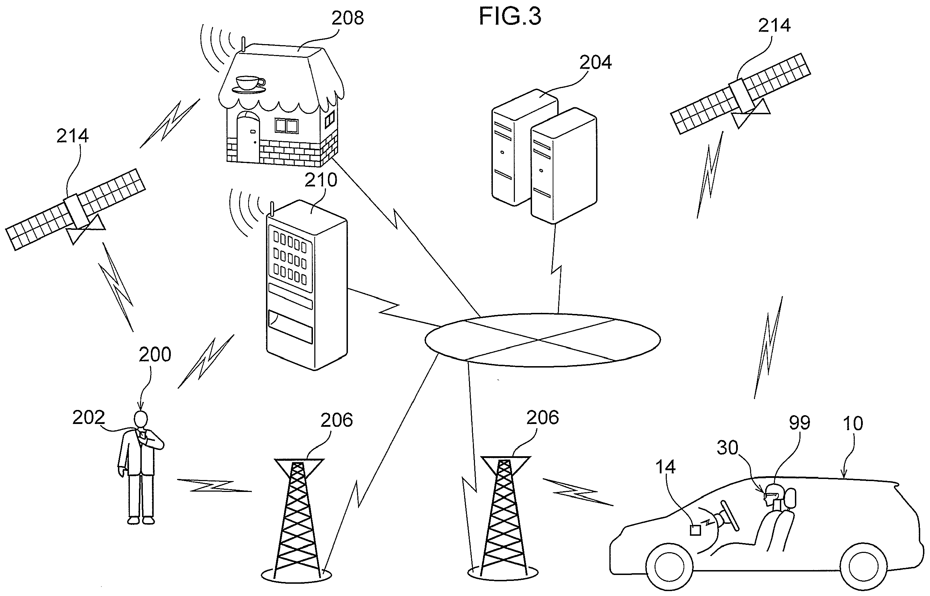

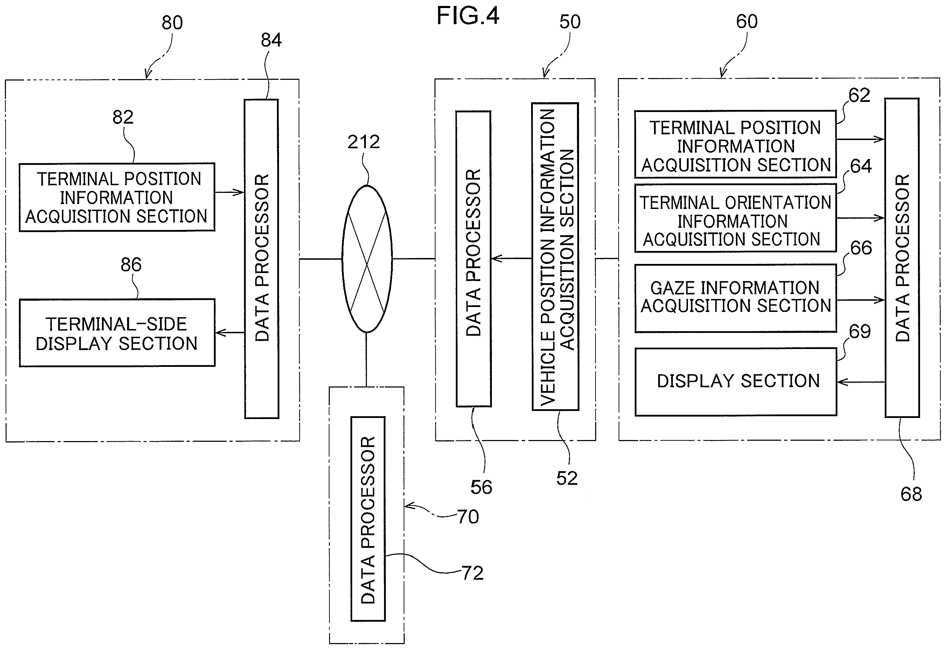

Next, explanation follows regarding coordination and communication between a vehicle dispatch service system and the respective configuration elements in the vehicle dispatch service coordinated search assistance system according to the first exemplary embodiment, with reference to Fig. 3 and Fig. 4. Note that configuration elements corresponding to those illustrated in Fig. 1 and Fig. 2 are allocated the same reference numerals, and duplicate explanation thereof is omitted.

Fig. 3 is a schematic diagram illustrating coordination between the vehicle dispatch service coordinated search assistance system according to the first exemplary embodiment, and a vehicle dispatch service configuring a coordination partner.

In the vehicle dispatch service coordinated search assistance system according to the first exemplary embodiment, first, a vehicle dispatch requester 200 uses a mobile phone terminal 202 or the like to request vehicle dispatch via a server 204, this being a controller of the vehicle dispatch service system. When this is performed, position information and vehicle dispatch request information relating to the vehicle dispatch requester 200 are transmitted to a network line 212 via a mobile telephone communication line provided by a mobile telephone base station 206, or a wireless LAN line or the like provided by a store 208 or automatic vending machine 210, or the like. Matching to a vehicle 10, this being a dispatch target vehicle on the server 204 connected to the same network line 212, is also performed. The vehicle 10 selected as the dispatch target vehicle as a result of the matching is provided with the position information and vehicle dispatch requester information relating to the vehicle dispatch requester 200 via a mobile telephone communication line or the like provided by a mobile telephone base station 206, and the network line 212. Note that the position information relating to the vehicle dispatch requester 200 and to the vehicle 10 is identified using, for example, the mobile phone terminal 202 used by the vehicle dispatch requester 200 and a GPS satellite 214. Note that in the first exemplary embodiment, the mobile phone terminal 202 used by the vehicle dispatch requester 200 and the GPS satellite 214 correspond to a vehicle dispatch requester-side position information acquisition section.

### Connection and Communication

Fig. 4 is a schematic diagram illustrating connection and communication between the configuration elements configuring the vehicle dispatch service coordinated search assistance system according to the first exemplary embodiment. As illustrated in Fig. 4, the vehicle dispatch service coordinated search assistance system according to the first exemplary embodiment is configured including a mobile phone terminal system 80, a network line 212, a server system 70, a vehicle system 50, and a wearable terminal system 60.

The mobile phone terminal system 80 is installed in the mobile phone terminal (mobile phone terminal 202 in Fig. 3) in the possession of the vehicle dispatch requester using the vehicle dispatch service system. The mobile phone terminal system 80 is configured including a terminal position information acquisition section 82, a data processing unit 84, and a terminal-side display section 86.

The vehicle system 50 is configured including a vehicle position information acquisition section 52 and a data processing unit 56. As illustrated in Fig. 1, the vehicle system 50 is installed in the vehicle 10 carrying the user 99 corresponding to a vehicle dispatch responder. Note that the vehicle position information acquisition section 52 in the vehicle acquires vehicle position information provided by a GPS satellite system (not illustrated in the drawings).

The wearable terminal system 60 is configured including a terminal position information acquisition section 62, a terminal orientation information acquisition section 64, a gaze information acquisition section 66, a data processing unit 68, and a display section 69.

The terminal position information acquisition section 62 acquires position information relating to the wearable terminal 30. The terminal orientation information acquisition section 64 acquires information relating to the "orientation" (and "aspect") of the wearable terminal. The gaze information acquisition section 66 acquires information relating to the gaze of the user 99 wearing the wearable terminal 30.

The data processing unit 68 receives various data from the terminal position information acquisition section 62, the terminal orientation information acquisition section 64, and the gaze information acquisition section 66. The display section 69 displays display data provided from the data processing unit 68 based on data acquired from the aforementioned sections.

Data communication between the data processing unit 56 of the vehicle system 50 and the data processing unit 68 of the wearable terminal system 60 is performed either directly or indirectly via a communication section, not illustrated in the drawings.

The server system 70 is configured including a data processing unit 72 that performs the vehicle dispatch service. Data communication between the vehicle system 50, the server system 70, and the mobile phone terminal system 80 is performed either directly or indirectly via the network line 212.

### System Flow

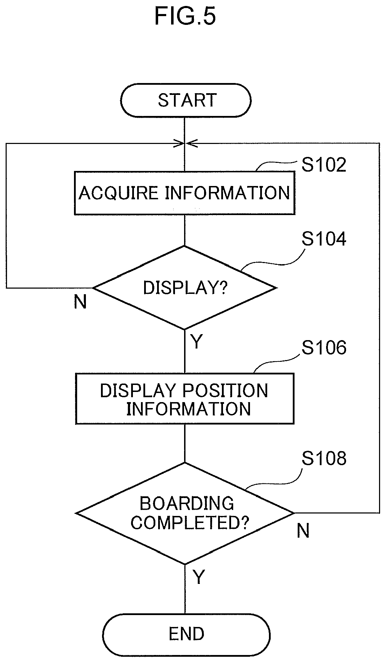

Next, explanation follows regarding a system flow of the vehicle dispatch service coordinated search assistance system according to the first exemplary embodiment, with reference to Fig. 5.

Note that the vehicle dispatch service coordinated search assistance system according to the first exemplary embodiment is executed when the vehicle dispatch responder (the user 99) on board the dispatch response vehicle 10 searches for the position of the vehicle dispatch requester 200. First, a vehicle dispatch request instruction is sent from the mobile phone terminal 202 of the vehicle dispatch requester 200 to the vehicle dispatch service system. In response thereto, matching of the vehicle dispatch requester 200 to a dispatch response vehicle 10 is performed by the vehicle dispatch service system. When the matching has been completed, step S102 is started.

At step S102, the position information relating to the vehicle dispatch requester 200 is acquired by the dispatch response vehicle 10 (or by the wearable terminal 30). Processing then transitions to step S104.

At step S104, determination is made as to whether or not to display position information relating to the vehicle dispatch requester 200. When determination is affirmative, processing transitions to step S106. When determination is negative, processing returns to step S102.

Note that "determination as to whether or not to display" may, for example, be a determination to "display" in cases in which the vehicle dispatch requester 200 is positioned within eyesight (visible range) of the vehicle dispatch responder, and to "not display" in all other cases.

At step S106, position information relating to the vehicle dispatch requester 200 is displayed on the display section 32 of the wearable terminal 30 worn by the vehicle dispatch responder. Processing then transitions to step S108.

At step S108, determination is made as to whether or not the vehicle dispatch requester 200 has boarded the dispatch response vehicle 10. Processing is ended in cases in which determination is affirmative. Processing returns to step S102 in cases in which determination is negative.

### Operation and Advantageous Effects

Next, explanation follows regarding operation and advantageous effects of the vehicle dispatch service coordinated search assistance system according to the first exemplary embodiment.

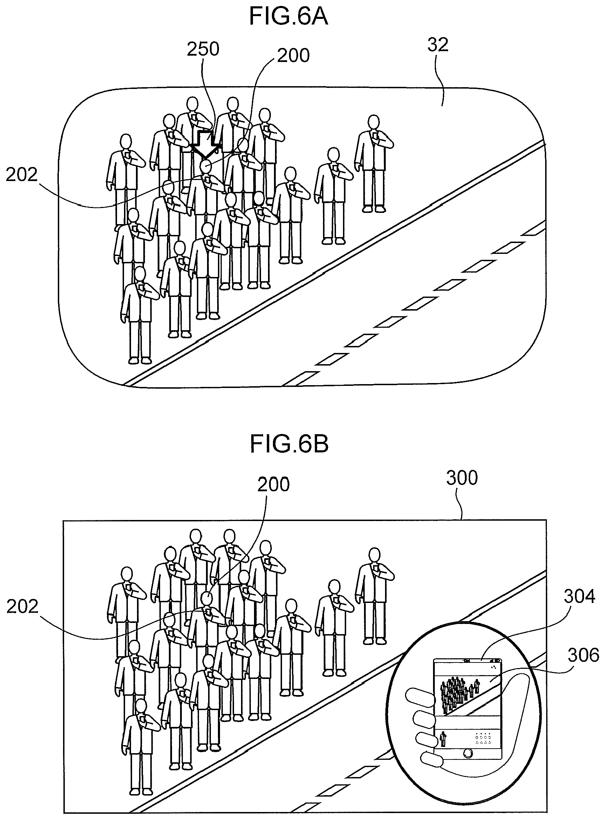

Fig. 6B schematically illustrates a scene as seen by a vehicle dispatch responder in a related method (a method that does not employ the vehicle dispatch service coordinated search assistance system according to the first exemplary embodiment), illustrated for comparative purposes. In this related method, the vehicle dispatch responder driving the dispatch response vehicle 10 has to search for the vehicle dispatch requester 200 in a scene 300 viewed from the driving seat. Accordingly, as illustrated in Fig. 6B, it is therefore necessary to search by looking between the actual scene and the position information displayed on a display section 306 of a mobile phone terminal 304 or the like, which is not an intuitive way of searching. Moreover, in cases in which plural other vehicle dispatch requesters using similar vehicle dispatch services are present around the vehicle dispatch requester 200, position information relating to the vehicle dispatch requester displayed on the display section 306 of the mobile phone terminal 304 becomes complex, making the vehicle dispatch requester 200 even more difficult to find. Further, the need for the vehicle dispatch responder to look between the scene 300 visible from the driving seat of the dispatch response vehicle 10 and the information displayed on the mobile phone terminal 304 or the like leaves room for improvement from the perspective of safe driving.

By contrast, Fig. 6A schematically illustrates a scene as seen by a vehicle dispatch responder through the display section 32 of the wearable terminal 30 of the vehicle dispatch service coordinated search assistance system according to the first exemplary embodiment. As illustrated in Fig. 6A, when the vehicle dispatch service coordinated search assistance system according to the first exemplary embodiment is actuated, a position display 250 for the vehicle dispatch requester 200 who is the search target is displayed on the display section 32 of the wearable terminal 30 worn by the vehicle dispatch responder. In Fig. 6A, an arrow pointing downward from above so as to indicate the vehicle dispatch requester 200 is displayed as the position display 250 for the vehicle dispatch requester 200.

The vehicle dispatch responder is thus capable of finding the position information relating to the vehicle dispatch requester 200 intuitively (easily) while looking at the actual scene (the scene as seen by the vehicle dispatch responder through the display section 32 of the wearable terminal 30). In this method, even in cases in which plural other vehicle dispatch requesters using similar vehicle dispatch services are present around the vehicle dispatch requester 200, the vehicle dispatch responder can easily locate the vehicle dispatch requester using the information (position display 250) displayed on the display section 32. Moreover, since there is no need for the vehicle dispatch responder to look between the scene 300 visible from the driving seat of the vehicle and the information displayed on the display section 306 or the like of a mobile phone terminal, the vehicle dispatch responder is able to concentrate on driving.

Note that in the vehicle dispatch service coordinated search assistance system according to the first exemplary embodiment, the position display 250 for the vehicle dispatch requester 200 can be displayed on the display section 32 in cases in which the vehicle dispatch requester 200 is positioned within eyesight of the vehicle dispatch responder. Accordingly, when there is still some distance between the vehicle dispatch requester 200 and the vehicle dispatch responder and there is no need for the vehicle dispatch responder to search for the vehicle dispatch requester 200 by eye, the position display 250 is not displayed on the display section 32 of the wearable terminal 30. This thereby enables the view of the vehicle dispatch responder driving the dispatch response vehicle 10 to be prevented from being obstructed when the vehicle dispatch responder is heading from a distant location toward the location of the vehicle dispatch requester 200.

The glasses-type wearable terminal 30 may include a CPU (the data processor 37), ROM, RAM, storage, and a communication interface. These configurations are connected together so as to be capable of communicating through a bus.

The CPU is a central computation processing unit that executes various programs and controls various sections. Namely, the CPU reads programs from the ROM or the storage, and executes the programs using the RAM as a workspace. The CPU controls the various configurations and performs various computations processing according to the programs recorded in the ROM or the storage.

The ROM stores various programs and various data. The RAM serves as a workspace that temporarily retains programs and data. The storage is configured by a Hard Disk Drive (HDD) or a Solid State Drive (SSD), and stores various programs including an operating system, and various data. The communication interface is an interface for communication, and, for example, employs an Ethernet (registered trademark), FDDI, Wi-Fi (registered trademark), or other standard.

### Second Exemplary Embodiment

Next, explanation follows regarding a vehicle dispatch service coordinated search assistance system according to a second exemplary embodiment, with reference to Fig. 5, and Fig. 7 to Figs. 8.

The vehicle dispatch service coordinated search assistance system according to the second exemplary embodiment is a modified example of the vehicle dispatch service coordinated search assistance system according to the first exemplary embodiment. Details similar to those covered in the explanation of the vehicle dispatch service coordinated search assistance system according to the first exemplary embodiment are therefore allocated the same reference numerals, and explanation thereof is omitted as appropriate.

### Connection and Communication

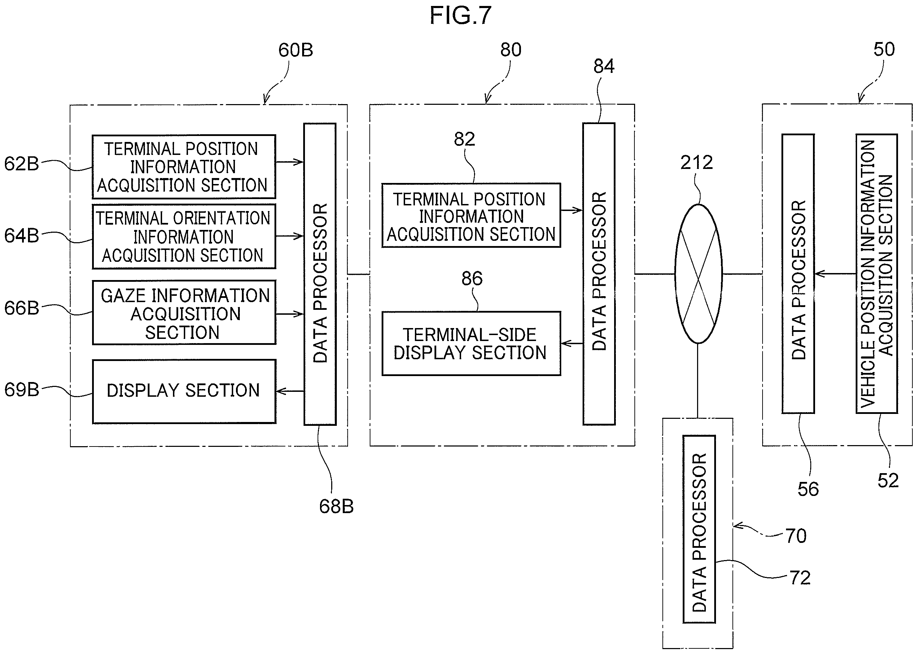

Fig. 7 is a schematic diagram illustrating connection and communication between configuration elements configuring the vehicle dispatch service coordinated search assistance system according to the second exemplary embodiment. As illustrated in Fig. 7, the vehicle dispatch service coordinated search assistance system according to the second exemplary embodiment is configured including the mobile phone terminal system 80, the network line 212, the server system 70, the vehicle system 50, and a wearable terminal system 60B.

Note that the system configurations of, and the connections and communication between, the vehicle system 50, the server system 70, and the mobile phone terminal system 80 are similar to those in the vehicle dispatch service coordinated search assistance system according to the first exemplary embodiment, and so explanation thereof is omitted. In the vehicle dispatch service coordinated search assistance system according to the second exemplary embodiment, the vehicle position information acquisition section 52 corresponds to a dispatch response vehicle-side position information acquisition section.

In the second exemplary embodiment, the wearable terminal system 60B is configured including a terminal position information acquisition section 62B, a terminal orientation information acquisition section 64B, a gaze information acquisition section 66B, a data processing unit 68B, and a display section 69B.

In the wearable terminal system 60B, position information relating to the wearable terminal 30 is acquired by the terminal position information acquisition section 62B. The terminal orientation information acquisition section 64B acquires information relating to the "orientation" (and "aspect") of the wearable terminal 30 and so on. The gaze information acquisition section 66B acquires information relating to the gaze of the vehicle dispatch requester wearing the wearable terminal 30.

The data processing unit 68B receives data acquired by the respective configuration sections of the terminal position information acquisition section 62B, the terminal orientation information acquisition section 64B, and the gaze information acquisition section 66B. The data processing unit 68B generates display data for display on the display section 69B based on the acquired data.

Data is communicated either directly or indirectly via a communication section, not illustrated in the drawings, between the data processing unit 84 of the mobile phone terminal system 80 and the data processing unit 68B of the wearable terminal system 60B. In the vehicle dispatch service coordinated search assistance system according to the second exemplary embodiment, the terminal position information acquisition section 62B of the wearable terminal system 60B and the terminal position information acquisition section 82 of the mobile phone terminal system 80 used by the vehicle dispatch requester 200 correspond to a vehicle dispatch requester-side position information acquisition section.

Next, explanation follows regarding a system flow of the vehicle dispatch service coordinated search assistance system according to the second exemplary embodiment, with reference to Fig. 5.

The vehicle dispatch service coordinated search assistance system according to the second exemplary embodiment is executed when the vehicle dispatch requester 200 who has requested vehicle dispatch using the vehicle dispatch service system searches for a dispatch response vehicle 10 corresponding to a dispatch vehicle. First, the vehicle dispatch requester 200 sends a vehicle dispatch request instruction from the mobile phone terminal 202 (or wearable terminal 30) or the like to the vehicle dispatch service system. In response thereto, matching of the vehicle dispatch requester 200 to a dispatch response vehicle 10 is performed. When the matching has been completed, step S102 is started.

At step S102, position information relating to the dispatch response vehicle 10 is acquired by the wearable terminal 30. Processing then transitions to step S104.

At step S104, determination is made as to whether or not to display position information relating to the dispatch response vehicle 10. When determination is affirmative, processing transitions to step S106. When determination is negative, processing returns to step S102.

Note that "determination as to whether or not to display" may, for example, be a determination to "display" in cases in which the dispatch response vehicle 10 is positioned within eyesight of the vehicle dispatch requester 200, and to "not display" in all other cases.

At step S106, the wearable terminal 30 worn by the vehicle dispatch requester 200 displays the position information relating to the dispatch response vehicle 10. Processing then transitions to step S108.

At step S108, determination is made as to whether or not the vehicle dispatch requester 200 has boarded the dispatch response vehicle 10. Processing is ended in cases in which determination is affirmative. Processing returns to step S102 in cases in which determination is negative.

### Operation and Advantageous Effects

Next, explanation follows regarding operation and advantageous effects of the vehicle dispatch service coordinated search assistance system according to the second exemplary embodiment.

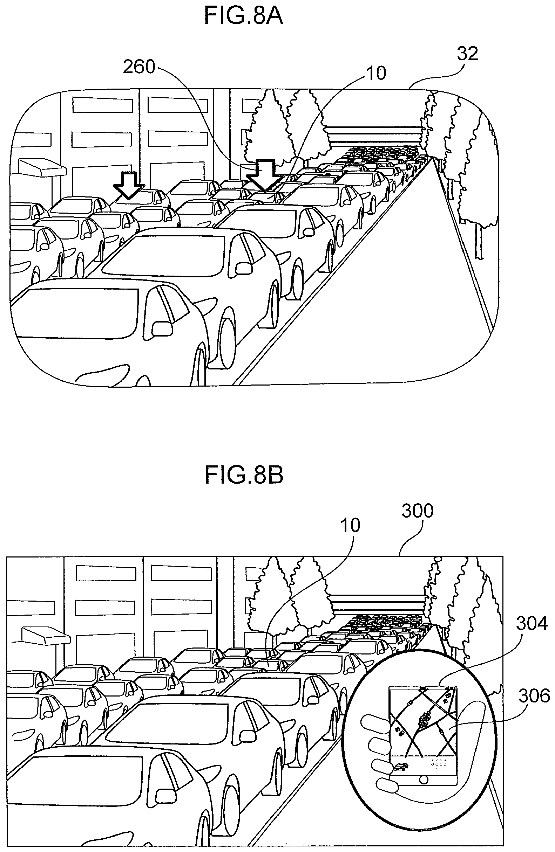

Fig. 8B schematically illustrates a scene as seen by a vehicle dispatch requester 200 in a related method (a method that does not employ the vehicle dispatch service coordinated search assistance system according to the second exemplary embodiment), illustrated for comparative purposes. In this related method, the vehicle dispatch requester 200 has to search for the dispatch response vehicle 10 by looking between the actual scene and the display section 306 of the mobile phone terminal 304 displaying position information in coordination with the vehicle dispatch service system. Accordingly, the vehicle dispatch requester 200 is unable to search for the position of the dispatch response vehicle 10 intuitively while looking at the actual scene 300. Moreover, in cases in which plural other dispatch response vehicles using similar vehicle dispatch services are present around the dispatch response vehicle 10, the position information relating to the dispatch response vehicle 10 displayed on the display section 306 of the mobile phone terminal 304 becomes complicated, making the dispatch response vehicle 10 even more difficult to find.

By contrast, Fig. 8A schematically illustrates a scene as seen by the vehicle dispatch requester 200 through the display section 32 of the wearable terminal 30 of the vehicle dispatch service coordinated search assistance system according to the second exemplary embodiment. As illustrated in Fig. 8A, when the vehicle dispatch service coordinated search assistance system according to the second exemplary embodiment is actuated, the display section 32 of the wearable terminal 30 worn by the vehicle dispatch requester 200 displays a position display 260 for the dispatch response vehicle 10 configuring the search target. In Fig. 8A, an arrow pointing downward from above so as to indicate the dispatch response vehicle 10 is displayed as the position display 260 for the dispatch response vehicle 10.

The vehicle dispatch requester 200 is thus capable of finding the position information relating to the dispatch response vehicle 10 intuitively (easily) while looking at the actual scene (the scene as seen by the vehicle dispatch requester through the display section 32 of the wearable terminal 30). In this method, even in cases in which plural other vehicles using similar vehicle dispatch services are present around the dispatch response vehicle 10, the vehicle dispatch requester 200 can easily locate the dispatch response vehicle 10 using the information (position information 260) displayed on the display section 32.

Note that in the vehicle dispatch service coordinated search assistance system according to the second exemplary embodiment, the position display 260 for the dispatch response vehicle 10 can be displayed on the display section 32 in cases in which the dispatch response vehicle 10 is positioned within eyesight of the vehicle dispatch requester 200. Accordingly, when there is still some distance between the dispatch response vehicle 10 and the vehicle dispatch requester 200 and there is no need for the vehicle dispatch requester to search for the dispatch response vehicle 10 by eye, the position display 260 is not displayed on the display section 32 of the wearable terminal 30. This thereby enables the view of the vehicle dispatch requester 200 to be prevented from being obstructed by the position display 260 when there is no need to search for the dispatch response vehicle 10.

### Other Embodiments

Explanation has been given regarding vehicle dispatch service coordinated search assistance systems according to respective exemplary embodiments. However, various embodiments may obviously by implemented within a range not departing from the spirit of the present invention. For example, the information displayed on the wearable terminal 30 may be displayed in the form of symbols or text instead of the arrows illustrated in Figs. 6 and Figs. 8. Moreover, methods to display the displayed information in multiple colors, or to assist position finding by, for example, causing a displayed image to flash, may be applied.

Moreover, the position display 250 and the position display 260 displayed on the display section 32 of the wearable terminal 30 may be made to disappear when the dispatch response vehicle 10 has reached the location at which the vehicle dispatch requester 200 is present.

## Claims

1. A vehicle dispatch service coordinated search assistance system comprising:
a glasses-type wearable terminal (30) that is worn by a vehicle dispatch responder;
a terminal orientation information acquisition section (42) that acquires orientation information relating to the wearable terminal;
a gaze information acquisition section (38) that acquires gaze information relating to the vehicle dispatch responder;
a vehicle dispatch responder-side position information acquisition section (44, 18) that acquires position information relating to the vehicle dispatch responder and to a dispatch response vehicle carrying the vehicle dispatch responder;
a vehicle dispatch requester-side position information acquisition section (202, 214) that acquires position information relating to a vehicle dispatch requester; and
a processor (37) that, in coordination with a vehicle dispatch service system that matches the vehicle dispatch requester with the dispatch response vehicle, displays position information relating to the vehicle dispatch requester on a lens section (32) of the wearable terminal based on the orientation information relating to the wearable terminal, the gaze information relating to the vehicle dispatch responder, the position information relating to the vehicle dispatch responder and to the dispatch response vehicle, and the position information relating to the vehicle dispatch requester, such that the display is overlaid on an actual scene viewed by the vehicle dispatch responder through the lens section of the wearable terminal.

2. The vehicle dispatch service coordinated search assistance system of claim 1, wherein the processor displays position information relating to the vehicle dispatch requester on the lens section (32) of the wearable terminal (30) in cases in which the vehicle dispatch requester is positioned within visible range of the vehicle dispatch responder.

3. A vehicle dispatch service coordinated search assistance system comprising:
a glasses-type wearable terminal (30) that is worn by a vehicle dispatch requester;
a terminal orientation information acquisition section (42) that acquires orientation information relating to the wearable terminal;
a gaze information acquisition section (38) that acquires gaze information relating to the vehicle dispatch requester;
a vehicle dispatch requester-side position information acquisition section (62B, 82) that acquires position information relating to the vehicle dispatch requester;
a dispatch response vehicle-side position information acquisition section (52) that acquires position information relating to a dispatch response vehicle; and
a processor (37) that, in coordination with a vehicle dispatch service system that matches the vehicle dispatch requester with the dispatch response vehicle, displays position information relating to the dispatch response vehicle on a lens section of the wearable terminal based on the orientation information relating to the wearable terminal, the gaze information relating to the vehicle dispatch requester, the position information relating to the vehicle dispatch requester, and the position information relating to the dispatch response vehicle, such that the display is overlaid on an actual scene viewed by the vehicle dispatch requester through the lens section of the wearable terminal.

4. The vehicle dispatch service coordinated search assistance system of claim 3, wherein the processor displays position information relating to the dispatch response vehicle on the lens section (32) of the wearable terminal (30) in cases in which the dispatch response vehicle is positioned within visible range of the vehicle dispatch requester.
